# EUROPEAN PATENT APPLICATION

(11) **EP 1 065 634 A1**
(43) Date of publication of application: **03.01.2001**
(21) Application number: 99630056.2
(22) Date of filing: 02.07.1999
(51) Int. Cl.: G07F 7/10

(54) **System and method for performing secure electronic transactions over an open communication network**

(71) Applicant: Mic Systems, 1076 AZ Amsterdam (NL)
(72) Inventor: Van Moer, Michel, 7220 Walferdange (LU); Oiknine, Michael, 2550 Luxembourg (LU)
(74) Representative: Waxweiler, Jean

(57) **Abstract**

A system and method for performing a secure transaction associated with on-line commerce includes an acquirer center (40) permitting secured communication with a customer (10) and a merchant (30) using an encrypted protocol for securing transmissions to and from the aquirer gateway over an open network (20). To identify the customer wo initiated the transaction, a PIN-code specific to the transaction is generated from the acquirer gateway (40) and transmitted to the customer's cellular telephone (50) as a message over the GSM network. The PIN-code is then transmitted from the customer's terminal (10) to the acquirer gateway (41) over the open network to authorize the transaction and permit identification of the customer.

## Description

### FIELD OF THE INVENTION

This invention relates generally to a system and method for performing secure electronic transactions over an open communication network with identification of the customer using a GSM network. In particular, the invention relates to a system and method for performing transactions such as purchases using a public communication network as a platform for credit card payment services.

### BACKGROUND OF THE INVENTION

Open public networks in a "blind" environment such as the Internet, and in particular the World Wide Web, have undergone fast growing trend as a distribution channel for businesses. These businesses typically provide an Internet site to promote one or more products or services. It would be convenient if customers could actually complete a secure transaction and purchase a product or service over the Internet by using account numbers or credit cards for payment. However, it is generally difficult to secure data that reside on servers connected to the Internet because the Internet is an open environment with no total guarantees of data privacy and thus a third party can readily access the data in such servers. Consequently sensitive data such as credit card numbers cannot be transmitted over the Internet with sufficient assurances of security.

Today, credit cards are used on the Internet or on the phone just as they are in the physical world. Customers buy an item and transmit their card information for payment. Basically, encryption involves a cryptographic protocol to convert plaintext into ciphertext in order to prevent any but the intended recipient from reading that data. There are many types of data encryption, and they are used to secure data traffic that traverses the open network. Common types include Data Encryption Standard and public-key encryption. In the case of the Internet, the credit card numbers travel on the World Wide Web using SSL (Secure Socket Layer) whose encryption efficiently prevents hackers from stealing card information when transmitted over the Internet.

Secure Socket Layer (SSL) is a cryptographic protocol designed by Netscape Communications Corporation to provide encrypted communications on the Internet. SSL is layered beneath application protocols such as HTTP, SMTP, Telnet, FTP, Gopher, and NNTP and is layered above the connection protocol TCP/IP. SSL is generally used by the HTTPS access method. The SSL application system is disclosed for example in US patent No. 5,825,890 and US patent No. 5,657,390.

The electronic payment system of US patent No. 5,671,279 governs the relationship between a Customer, Merchant, and Acquirer center to perform credit card purchases over an open network. With such systems, certain types of risk such as credit card fraud can be reduced by transmitting credit card account numbers between buyers and banks without revealing them to merchants.

Another currently used solution for payment in a "blind" environment using mainly credit cards is the Secure Electronic Transaction (SET) protocol. More specifically, Secure Electronic Transaction (SET) is a credit card protocol used for the Internet and developed by VISA and MasterCard where each buyer has to own an electronic wallet on his computer and is identified with a digital certificate. A system using the SET protocol is disclosed for example in US patent No. 5,815,657. Today, on the Internet, 99% of transactions are carried out using credit cards secured with SSL (Secure Socket Layer), and only 1% of transactions with SET.

The existing cryptographic protocols, such as SET, generally works as follows:
1. Customers receive digital certificates. Such certificates authenticate that the bearer is authorized to use the card. When making a purchase, the certificate is attached to both the order and the payment information and sent to the merchant.
2. Encrypted transactions cannot be read by the merchant. The merchant can only view the order, but not the payment information. The payment information is then forwarded to the merchant acquirer.
3. Transactions are authorized using existing channels. The encrypted payment information is unlocked by the acquiring institution. It authenticates the customer and then sends the card information through the existing card networks for authorization from the issuing bank.

These techniques proposed to secure data on the Internet involve data encryption, which may provide adequate security for a limited time because decryption technologies are being developed as rapidly as the encryption techniques themselves and encryption techniques may be readily broken.

By far the main current problem with the use of credit cards in a "blind environment is fraud. This problem is exacerbated on the Internet as evidenced by the fact that about 50 % of credit card frauds come from Internet credit card transactions, which weight only 2% of all credit card transactions.

The problems that favor fraud when using credit cards with SSL in a "blind" environment such as the Internet are the following:
1. Credit card information resides on a merchant's Web server. Thus, while it is almost impossible to access and steal credit card information while transmitting over SSL, it is possible to "crack" the wall and get into a Web merchant database. Indeed, once a customer has bought on the Internet, the merchant will keep customer information on his server for future purchases. Depending on the technology used by the merchant to shield this information from the Internet, it might be easy to penetrate the database, access and pick up this information. Examples of this happening are now numerous.
2. Stolen credit card information can readily be used. On the Internet, or on the phone, one can buy using someone else's credit card. Actually, there is no need to steal the credit card itself, but only the information displayed on it. Since there is no reliable process of buyer identification providing that the customer is the legitimate user of the card, the door to fraud is wide open.

Additionally, on the Internet, even if the SET protocol handles technically well the identification issue, the following serious problems are preventing its widespread adoption (it is expected that in 2002 less than 5% of Internet commerce transactions will be SET-based):
1. Processors are relatively slow. Specifically, SET transactions take twice as long as standard credit card transactions to go through processors' systems.
2. SET needs to become an open standard. More than 100 companies are working on applications based on the SET protocol. However, they have not yet reached the market.
3. The issued certificates are only as good as the issuers. It is up to the certificate issuer to determine what information is required to validate the certificate requester. Some issuers may only request readily available data such as address and date of birth. This leaves merchants exposed from transactions that are authorized and later found to be fraudulent.
4. Electronic wallet is not a widespread technology. Complicated plugins for downloading electronic wallet will slow customer adoption.
5. The technology is not "portable". In order to make a purchase using the SET protocol, a user can only make the purchase from the computer onto which he downloaded the electronic wallet and from which he established the certificate of identity.
6. Merchants are reluctant to acquire the technology. Today, payment processes at Web merchants are SSL-related. Therefore, for Web merchants, offering SET entails more than simply installing a new software package. In particular, it requires adding or adopting new business processes and absorbing the time and costs associated with the added complexity.

Besides, the SET protocol has been designed exclusively for payment on the Internet, and thus, it cannot be used in the physical world (i.e. on the phone).

### SUMMARY OF THE INVENTION

It would therefore be desirable to provide a convenient system and method for performing a secure, reliable and efficient transaction associated with on-line commerce and permitting identification of the buyer over an open communication network.

Accordingly, it is a primary objective of the present invention to provide a payment system and method for electronic transactions which overcome the aforementioned inadequacies of the prior art systems and which makes a considerable contribution to the art of secure electronic payment.

It is another object of the present invention to provide a convenient payment system and method which eliminates credit card fraud due to the transmission of credit card information over an open communication network.

Another object of the present invention is the provision of a payment system and method using a specific transaction identification code transmitted via the cellular mobile telephone (GSM) network for identifying the buyer.

To achieve this, the system of the invention is characterized by the features claimed in the characterizing part of claim 1 and the invention provides a method according to the characterizing part of claim 6.

Basically, the system and method according to the invention involves an acquirer center permitting secured communication with the customer and the merchant using an encrypted protocol for securing transmissions to and from the acquirer gateway over the open network. To identify the customer who initiated the transaction, a PIN-code specific to the transaction is generated from the acquirer gateway and transmitted to the customer's cellular telephone as a message over the GSM network. A response code based on the said transmitted message is transmitted from the customer's terminal to the acquirer gateway over the open network. The transaction is authorized by the acquirer center only if the response code entered on the terminal matches the expected response code.

Advantageous embodiments of the invention are claimed in the subclaims.

In accordance with a preferred embodiment of the system a transaction order is initiated from the customer to the acquirer over the Internet by employing an SSL encrypted link. Subsequently, the acquirer which is operatively coupled to the customer over a cellular phone network transmits a challenge SMS message via the customer's phone. The system is using the IMSI (International Mobile Subscriber Identity) sitting on the SIM card (Subscriber Identity Module) to identify the buyer and/or the seller. This payment method is particularly well adapted for transactions occurring in a "blind" environment such as Web shopping (eCommerce) and telephone order, i.e. where the buyer and the seller are not in front of each other at the moment of the transaction.

### BRIEF DESCRIPTION OF THE DRAWINGS

The present invention will now be described with reference to the attached drawing figures in which:
Fig. 1 is a schematic diagram of a payment system in accordance with the present invention which is incorporated into the Internet;
Figs. 2a and 2b are flowcharts outlining the payment process in accordance with the present invention used to purchase a product or service on the Internet;
Fig. 3 shows a transactional flow diagram illustrating the process outlined in Fig. 2.

### DETAILED DESCRIPTION

The present invention provides a system for performing an electronic payment for a transaction initiated over an open network in a "blind" environment. The system involves the use of the cellular telephone (GSM) of the customer to authenticate the user's identity by generating a secure transaction PIN code transmitted via the GSM network.

The electronic payment system provides customers, merchants, and banks with a secure mechanism for using an open network as a platform for credit card payment services. The system governs the relationship between a Customer, Merchant, and Acquirer to perform credit card purchases over open networks as the Internet. The basic method involves a secure connection with an encryption technique (SSL) for communicating purchase order and payment information over the Internet between the Customer and the Acquirer in response to the customer's request to make a purchase. The Acquirer automatically generates a PIN code specific for each transaction and sends it as a text SMS (Short Message Service) to the customer's cellular phone via the GSM network which is completely isolated from the Internet. The PIN code is a plain code randomly computer-generated. This PIN code is received automatically and securely at the customer's IMSI (International Mobile Subscriber Identity) which is the unique number identifying every GSM-subscriber.

After receiving the specific-transaction PIN code as text SMS using the customer's GSM, the customer has then to enter, within a specific time period, the specific-transaction PIN into the Internet interface of the Merchant which will be sent online to the Acquirer to be verified; if the transaction PIN code received by the Acquirer matches the PIN code which was generated, the Acquirer sends back a signal to the Merchant confirming that the transaction is accepted, otherwise a "Reject" message will appear on the screen.

For security reasons, the specific transaction PIN Code sent to the customer's GSM has a limited lifetime, i.e. after a specific time period from the reception of the SMS message, the transaction-specific PIN Code is no longer useful.

After confirming the validity of the transaction, the purchases made through the Acquirer will be invoiced to the customer and the Merchant will be paid by the Acquirer.The transaction between the Customer, Merchant and the Acquirer may occur automatically on two separate networks, namely the Internet and the GSM network.

The description of the preferred embodiment illustrates the situation where the response code to be entered by the customer is the received message corresponding to the transaction-specific PIN code, but modifications to make the invention applicable to a response code based on an algorithm having the transaction-specific PIN code as variable are apparent to those skilled in the art and do not need to be described in details. For example, such algorithm can be stored as software in the customer's computer.

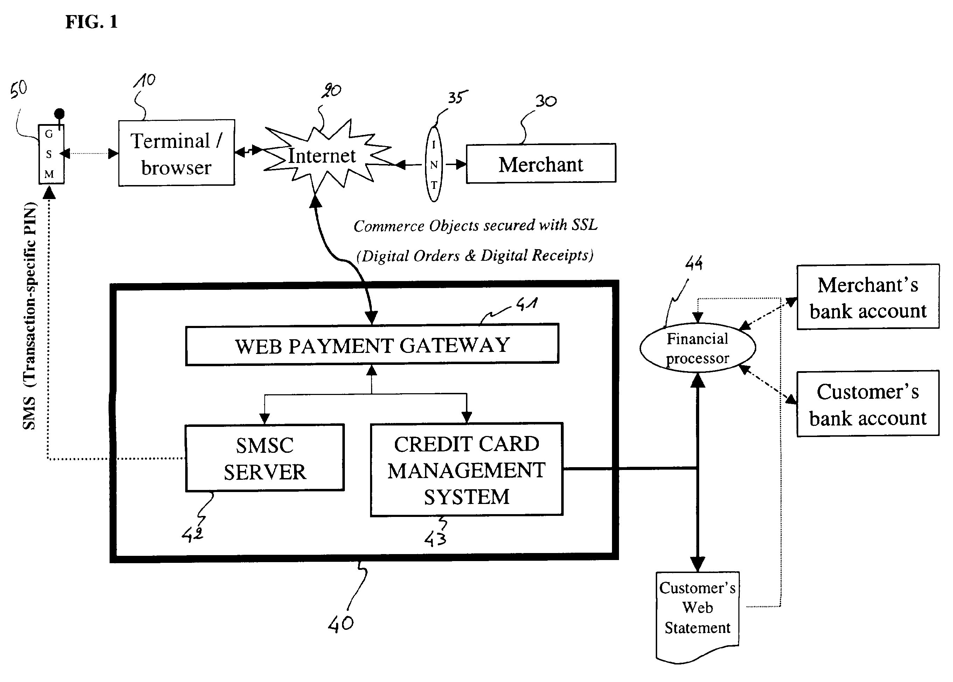

Fig. 1 shows an example of a system in accordance with the present invention which is incorporated into the Internet wherein the Customer is buying from a Web shop using a browser. Examples of web browsers include Netscape's Navigator, Microsoft's Internet Explorer, NCSA Mosaic, Lynx and W3.

A personal computer 10 or other terminal is coupled to the open Internet 20 via an input/output device that typically includes a modem. The computer 10 may be employed by a customer to search the Internet with a web browser in a conventional manner and communicate with a Web server 30 that may represent, for example, a Merchant providing a product or service.

In order to complete a transaction according to the system of the invention, the customer needs a GSM phone 50 with a SIM card working on the GSM network coverage. The SIM card (Subscriber Identity Module) is a chip-card containing the necessary subscriber information such as the customer's IMSI (International Mobile Subscriber Identity) which is the unique number identifying every GSM subscriber. IMSI and SIM together ensure the authentication of the subscriber and guarantee the inviolability of the subscriber identity.

With the system of the invention, a customer - who must be a GSM subscriber - may decide to become a client of the Acquirer 40 by contracting via the Web site of the Acquirer 40. During the application, the customer has to give his GSM number that will be linked directly to his account number at the Acquirer 40.

The account number will then be transferred online to the acquirer processing center; upon receiving this communication, the center can automatically generate a PIN code specific for each transaction and send it as a text SMS (Short Message Service) to the client's GSM phone via the GSM network.

Once registered with the Acquirer, the client may purchase items with any Merchant 30 endorsed with the Acquirer 40; for this purpose, his account number will have to be entered into the Merchant/Acquirer Internet interface 35 for the Merchant 30 (which may therefore be either a commercial Web site 30 or a physical shop with a Web connection) .

The Acquirer 40 includes a payment gateway 41 that uses Web technology and which resides on the Acquirer Web server. The web payment gateway 41 employs an encryption protocol such as SSL for communicating with customers and endorsed merchants over the Internet.

The Acquirer 40 also includes an SMSC server 42 linked directly to the Web server 41. The SMSC server 42 is provided to send SMS messages and utilizes the message service offered by the GSM digital cellular telephone system. Using SMS, a short alphanumeric message (160 alphanumeric characters) can be sent to a cellular mobile phone 50 to be displayed there, much like in an alphanumeric pager system. The message is buffered by the GSM network until the GSM phone 50 becomes active.

Further, the Acquirer 40 also includes a card management system 43 linked directly to the Web server.

The Acquirer 40 or payment gateway provides a secure connection to solve the problem of Internet-based transactions in accordance with payment protocol that secures credit card payments and certifies identification of both the registered Customer and the endorsed Merchant, any sensitive data transmitted over the Internet and related to the electronic transaction being secured with the SSL protocol. That is, all transmissions between the Internet and the Acquirer are secured with SSL protocol.

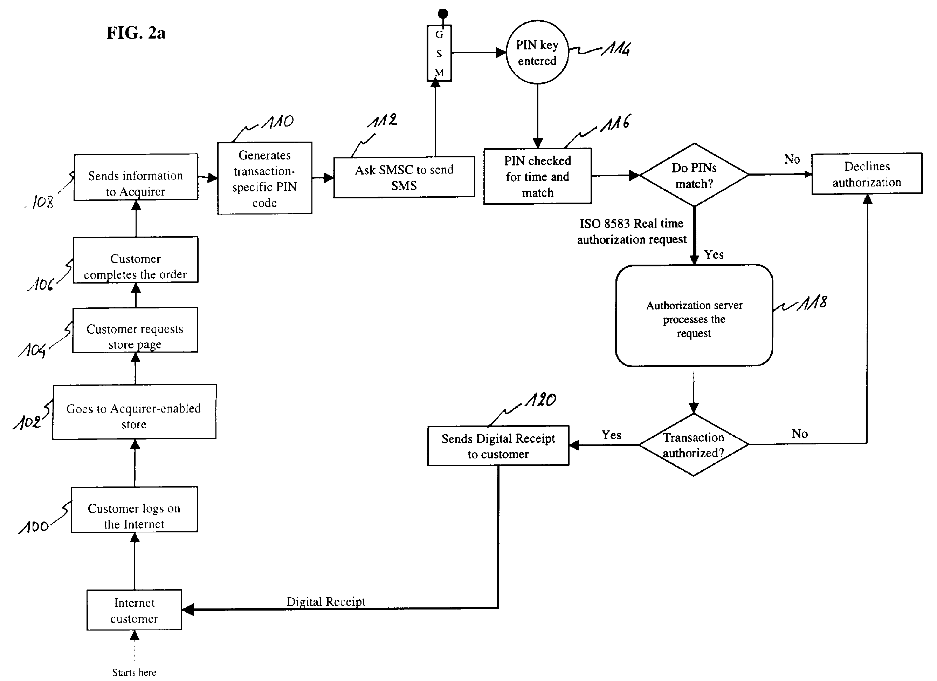

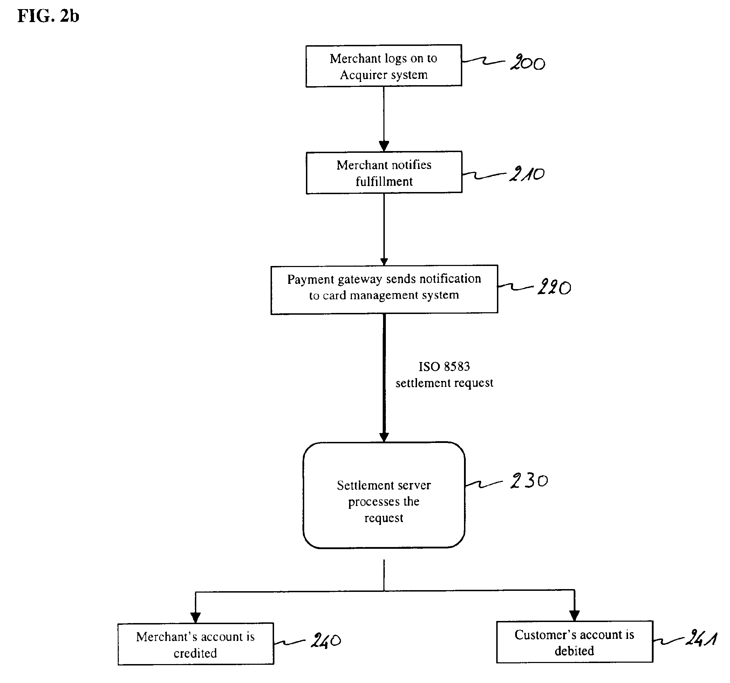

Figs. 2a and 2b show a flow diagram illustrating one embodiment of the process used to purchase a product from the Internet in accordance with the present invention. Each block in Fig. 2 identifies the operations to be performed by the Gateway, the computer and the GSM phone to provide the functionality involved by the present invention.

The flow diagram illustrates the situation where the customer initiates the purchase from a Web shop using a browser, but modifications to make the present invention applicable either to a situation where the customer is buying from a commerce-enabled call-center using a phone, or to a face-to-face situation where the customer/GSM subscriber is buying directly in a physical shop will be readily apparent.

The customer commences operations 100 to make a purchase over the Internet in a conventional manner and then connects 102 to an Acquirer-enabled store to request a store page allowing a transaction. The Acquirer-enabled store sends 104 the store page containing a Digital Offer to the customer. Once the customer finishes shopping, he communicates with the Web Payment Gateway to get the order form in order to make the purchase by clicking the Digital Offer on the store page. Then, the customer completes 106 the order form containing product information from the Digital Offer and sends it back to the payment gateway for further processing.

The payment gateway subsequently requests authorization in real time to the Card Management system and generates 110 a specific PIN code associated to the requested transaction. The transaction specific PIN code may be randomly generated by the payment gateway. The transaction-specific PIN code is transmitted along with the cellular telephone number of the customer to the SMSC server.

The SMSC server proceeds to transmit 112 the transaction-specific PIN code to the unique cellular telephone number of the customer via the GSM network.

The identified customer/GSM suscriber acknowledges receipt of the SMS message on the unique cellular phone by entering 114, within a predetermined time period, the transaction-specific PIN code on the computer which is in communication with the Acquirer via the Internet. The generated transaction-specific PIN code and the code entered by the customer are then compared 116 by the Acquirer and if the codes match, authorization for the transaction is requested 118 to an Authorization server using an encoding scheme such as ISO 8583 in real time. ISO 8583 is an International standardized interface between payment processors and banks to handle transaction authorization and settlements.

The Authorization server provides financial authorization services for the payment gateways connected to it via a network such as the Internet. In a typical credit card transaction, this means that whenever a payment gateway is handling the card payment transaction, it requests an authorization server to broker the card transaction between the acquiring bank and the card-issuing bank in order to authorize it. This causes the card-issuing bank to reserve the amount of the purchase against the cardholder's account.

If the transaction is authorized, the Payment Gateway transmits 120 a Digital receipt for the purchase product to the customer via the Internet.

After the transaction is authorized, a Digital Receipt 120 is sent to the customer's browser. After shipping of the purchased product, the Merchant establishes 200 communication with the Acquirer and notifies 210 fulfillment of the transaction to the Payment Gateway.

The Payment Gateway then locates the authorized transaction and transmits 220 notification to the Card Management System which processes 230 the request of payment settlement via a financial processor or Settlement server.

The settlement server provides financial settlement for the payment gateways connected to it via a network such as the Internet. In a typical credit card transaction, this means that whenever a payment gateway is handling the transaction settlement, it requests a settlement server to broker the card transaction between the acquiring bank and the card-issuing bank in order to settle it. This causes the card-issuing bank to debit the cardholder's account and the acquiring bank to credit the seller's account.

Finally, the Card Management System processes the payment for the authorized transaction by crediting 240 the Merchant's account and by debiting 241 the Customer's account.

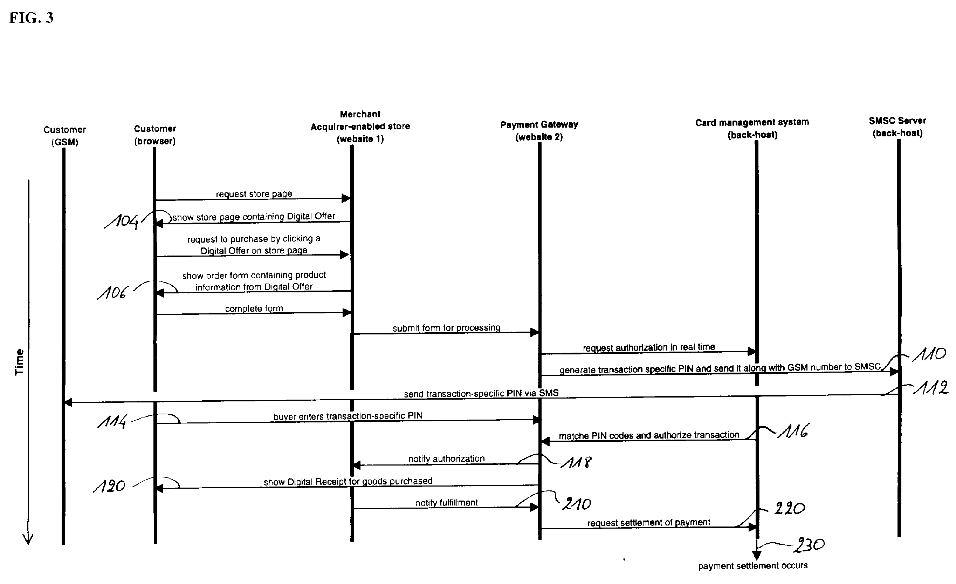

Much of the functionality illustrated in Fig. 3 is identical to that previously described in conjunction with Figs. 2a and 2b. Accordingly, that identical functionality has been designated by similar reference numerals and a description of that identical functionality is not repeated.

The basic system and method of the invention allows a customer to browse the Internet while performing secure transactions via a secure communication medium that is isolated from the Internet because the customer's cellular phone is used to authenticate the customer's identity through a unique electronic service. That is, the customer receives a transaction-specific PIN code and will be authenticated by his GSM number.

Therefore, if a third party fraudulently obtains the user's account number and attempt to use this account number to purchase on the Internet or on the phone, such attempted transaction will never be authorized since he will not receive the transaction PIN Code or message via SMS.

Indeed, it is the legitimate GSM suscriber customer who will receive the SMS message containing the transaction-specific PIN Code since the SIM card would still be in his hands. Moreover, the security of the SIM card makes it impossible to re-route an SMS message to a non-authorized phone. Thus, it does not matter if someone eavesdrops or steals a customer account number, as it won't be of any use to him without the SIM card or the ISMI of the customer, thereby solving the problem of fraud for Internet-based credit card transactions.

However, this scheme may not be sufficiently secure because a third party could potentially steal the SIM card of a Customer and also fraudulently obtain the account number of the same Customer. To solve that problem, a user's access code or password can readily be added either on the customer's cellular phone or to establish communication between the user and the payment gateway over the Internet.

It will be readily apparent that the system of the invention does not have the shortcomings of SET on the Internet . The system works over the SSL protocol, which is the widely accepted standard, and does not require any additional software, package or business processes for the merchant. Rather, it works just as a conventional credit card. Moreover, the system does not require any technological investment from the customer, except that the customer only needs a GSM phone using a SIM card.

While the above description of the preferred embodiment primarily applies to SSL based application systems, it will be readily apparent that the system and method of the invention may be employed in the same manner with other encryption protocols to provide encrypted communication on the Internet.

Similarly, the system of the invention might use other communications protocol (e.g. IP or any other packet-based protocol) than SMS to send the transaction-specific PIN codes. For example, Internet Protocol (IP) is the network layer for the TCP/IP protocol suite widely used on Ethernet networks defined in STD 5, RFC 791 and is a connectionless, best-effort packet switching protocol. It provides packet routing, fragmentation and re-assembly through the data link layer. Alternately, the system would be applicable in a similar manner to GPRS (General Packet Radio Service) which is a wireless protocol enabling the transmission of packet switched data through GSM networks, thus providing connectionless data transfer, and to UMTS (Universal Mobile Telecommunications System) which will probably replace or complement all existing digital wireless protocols in the future.

As discussed previously, the essential characteristics of the system are the transmission of the transaction PIN code to the customer's IMSI in order to authenticate him, regardless of the protocol used for that purpose, and the comparison between the response input from the computer and the generated PIN code.

The present invention may, of course, be carried out in other specific ways than those set forth above. In particular, the customer may initiate a transaction by phone with an acquirer-enabled merchant. Telephone orders which require that a user be accurately identified, such as reservation services, may be also accomplished securely with the system and method of the invention. The process used for that purpose is entirely similar to that described herein for purchases on the Internet, except that the customer transmits the request over the telephone network to the merchant and that the merchant communicates with the acquirer gateway to initiate the transaction over the open network. When the transaction-specific PIN Code or message is received in the customer's cellular phone, it is transmitted by the customer to the merchant by phone. Finally, the merchant enters the transaction PIN code over the open network to confirm validity of the transaction.

Each customer will be able to use the virtual card of the present system at least the following transaction channels:
- Internet : the end-user is buying from a Web shop using a browser;
- Phone: the end-user is buying from a commerce-enabled call-center using a phone; and
- Face-to-face: the end-user is buying from a brick-and-mortar shop.

Although the invention is described herein with reference to the preferred embodiment, one skilled in the art will be able to substitute numerous arrangements which although not explicitly shown or described herein embody the principles of the invention. Accordingly, all such alternatives, modifications and variations fall within the scope of the present invention as defined by the claims. For example, while the invention has been described in connection with Figs. 1-3 as a system and method for completing a transaction on the Internet, the invention is more broadly applicable to a method for completing a transaction on any open communication network.

## Claims

1. A system for performing an electronic transaction over an open communication network (20) between a customer (10) and a merchant (30) which is connected to said open network, the customer having a cellular telephone (50) with an identification chip-card (SIM) working on a GSM network,
said system comprising:
a computer terminal (10) connected to said open network (20),
an acquirer center (40) having an acquirer gateway (41) linked to said open network (20) for permitting secured communication using an encryption protocol between said terminal (10) and said acquirer center (40) and between said merchant (30) and said acquirer center (40) through said open network (20) to initiate the transaction,
characterized in that said acquirer center (40) further comprises means associated with said acquirer gateway (41) for generating a PIN-Code specific to said transaction responsive to a request from the customer to complete the transaction,
an identification server (42) associated with said acquirer gateway (41) for transmitting said transaction-specific PIN code as a message to the customer's cellular telephone (50) over the GSM network to permit said customer to enter a response code in said terminal (10), said response code being based on said transmitted message,
comparing means associated with said acquirer gateway (41) for comparing said response code entered on said terminal (10) to an expected response code, and
authorization means (43) for authorizing said transaction only when the response code entered on said terminal (10) matches the expected response code based on said transmitted message.

2. The system of claim 1, characterized in that said open network (20) comprises the Internet such that the communications between said customer, said merchant (30) and said acquirer center (40) comprise World Wide Web communications.

3. The system of claim 1, characterized in that said encryption protocol comprises a Secure Socket Layer (SSL) protocol.

4. The system of claim 1, characterized in that said expected response code to be entered in said terminal (10) is said transaction-specific PIN code which is transmitted as a message in the customer's cellular phone (50) to authenticate said customer.

5. The system of claim 1, characterized in that said identification server (42) comprises an SMSC server (42) for transmitting said transaction-specific PIN code as SMS message to said customer's cellular phone (50).

6. A method for performing an electronic transaction over an open communication network (20) between a customer and a merchant (30) which is connected to said open network, the customer having a cellular telephone (50) with an identification chip-card (SIM) working on a GSM network,
said method comprising the steps of:
establishing communication between a computer terminal (10) and said merchant (30) offering a transaction over said open communication network (20), and
establishing communication between said terminal (10) and an acquirer center (40) responsive to a request from said customer to initiate the transaction, said acquirer center (40) being operatively linked to said terminal (40) and said merchant (30) over said open communication network (20) through an acquirer gateway (41), the communication employing an encrypted protocol,
characterized in comprising the steps of:
generating a PIN-code specific to said transaction generated from said acquirer gateway (41) and transmitting said transaction-specific PIN code to said customer's cellular telephone (50) as a message over the GSM network responsive to a request from the customer to complete the transaction,
entering, in said terminal (10), a response code based on said transmitted message, said response code being transmitted to said acquirer gateway (41) over said open communication network (20),
comparing, by the acquirer center (40), said response code with an expected response code, and
confirming validity of the transaction only when the response code entered on said terminal (10) matches the expected response code based on said transmitted message to authorize the transaction.

7. The method of claim 6, characterized in comprising the steps of:
transferring the customer's account number online over said open network to said acquirer center (40), said account number being linked directly to the customer's phone number,
automatically generating said transaction-specific PIN code and transmitting it to said customer's cellular phone (50) upon receiving said customer's account number.

8. The method of claim 6, characterized in that said open network (20) comprises the Internet such that communications between said customer, said merchant (30) and said acquirer center (40) are World Wide Web communications.

9. The method of claim 6, characterized in that said encrypted protocol comprises a Secure Socket Layer (SSL) protocol.

10. The method of claim 6, characterized in that said expected response code to be entered in said terminal (10) is said transaction-specific PIN code which is transmitted as a message at the customer's cellular phone (50) to authenticate said customer.

11. The method of claim 6, characterized in that said transaction-specific PIN code is transmitted as a SMS message on to said customer's cellular phone (50).
